# FASCICULE DE BREVET EUROPEEN

(11) **EP 0 353 142 B1**
(45) Date de publication et mention de la délivrance du brevet: **19.10.1994**
(21) Numéro de dépôt: 89402099.9
(22) Date de dépôt: 25.07.1989
(51) Int. Cl.: H05B 3/26

(54) **Vitrage chauffant comprenant une couche mince électro-conductrice déposée sur un substrat en verre, associé à des clinquants métalliques comme moyens d'alimentation électrique**
Beheizte Glasscheibe mit einer dünnen elektrischleitenden Schicht, welche auf einem Glassubstrat aufgetragen ist, und metallische Leiter zur elektrischen Speisung
Heated window having a thin electrically conductive layer deposited on a glass pane and connected to a metallic foil as the electrical power supply

(30) Priorité: 27.07.1988 FR 8810140
(43) Date de publication de la demande: 31.01.1990
(73) Titulaire: SAINT-GOBAIN VITRAGE INTERNATIONAL, 92400 Courbevoie (FR)
(72) Inventeur: Sauvinet, Vincent, F-60950 Ermenonville (FR); Chaussade, Pierre, F-45600 Sully sur Loire (FR); Oudard, Jean François, F-94300 Vincennes (FR); Cordier, Bruno, F-77100 Nanteuil les Meaux (FR); Goerenz, Walter, D-5110 Alsdorf (DE); Van der Meulen, Rudolf, D-5100 Aachen (DE)
(74) Mandataire: Luziau, Nelly

(56) Documents cités:
- EP-A- 0 137 923
- EP-A- 0 217 703
- FR-A- 1 116 234
- FR-A- 1 533 535
- FR-A- 2 091 263
- FR-A- 2 390 882
- GB-A- 971 008
- US-A- 3 781 524

## Description

La présente invention concerne un vitrage à couche électro-conductrice déposée directement sur la surface de verre et plus particulièrement son alimentation en courant électrique.

Il est connu d'alimenter une telle couche électro-conductrice par des bandes d'amenée de courant en une composition électriquement conductrice déposée sur le verre par sérigraphie. Cette composition conductrice est une suspension d'argent métallique finement divisé et une fritte à bas point de fusion, dispersés dans un liant organique fluide. Après avoir été déposée sur le verre, cette composition doit être cuite pour acquérir sa solidité finale.

La réalisation de telles bandes d'amenée de courant est par exemple décrite dans le document de brevet français publié sous le n° 1 464 585.

Le dépôt de bandes d'amenée de courant comme évoqué ci-dessus est contraignant par les opérations de dépôt elles-mêmes, par l'opération de cuisson exigée, par les précautions de manipulation à prendre après dépôt tant que la cuisson n'est pas faite.

En outre, compte-tenu de la fragilité du dépôt non encore recuit, si l'on doit faire des dépôts sur les deux faces d'une plaque de verre, dépôts de bandes conductrices et/ou dépôts décoratifs d'émail noir essentiellement destinés à masquer les bandes conductrices qui sont généralement fragiles et qui n'acquièrent leur solidité, comme les bandes conductrices, que par cuisson, il convient d'effectuer une cuisson séparée pour le dépôt sur chaque face ou de prendre des précautions pour manipuler la plaque de verre ayant des dépôts non recuits, c'est-à-dire fragiles, sur chaque face.

Ces opérations de cuisson que l'on risque de devoir multiplier et/ou les précautions de manipulation qu'il faut prendre, grèvent le coût de fabrication de vitrages ayant de telles bandes d'amenée de courant.

En outre, ces bandes conductrices ont une résistance électrique par mètre de longueur relativement importante et de l'ordre de 1 ohm, ce qui se traduit donc par une puissance électrique consommée dans ces seules bandes, relativement importante, par une surchauffe locale qui risque de provoquer des contraintes dans le verre et donc de le fragiliser, ce qui également risque d'entraîner la dégradation des matériaux organiques associés au verre, en l'occurence dans le cas d'un vitrage feuilleté, du butyral de polyvinyle (P.V.B.) qui constitue la feuille thermoplastique transparente intercalée entre les feuilles de verre.

Pour éviter ces problèmes évoqués ci-dessus, liés à l'alimentation par bandes conductrices sérigraphiées d'une couche électro-conductrice déposée sur un substrat en verre, la présente invention envisage d'employer des moyens d'amenée du courant électrique, plus simples à mettre en place, ayant une résistance électrique plus faible, donc consommant moins d'énergie électrique et n'entraînant pas des surchauffes aussi importantes du verre et autres matériaux qui lui sont associés.

Elle propose pour cela d'alimenter une couche électro-conductrice déposée sur un substrat en verre, à l'aide de clinquants métalliques maintenus en contact avec la couche.

Il est par ailleurs connu des brevets **US-3** **781** **524** et **FR-1** **464** **585** un vitrage feuilleté constitué de deux plaques de verre enserrant deux couches intermédiaires en PVB entre lesquelles est disposé un film-support souple en téréphtalate de polyéthylène préalablement recouvert par une technique de dépôt sous vide, d'une mince couche conductrice, couche alimentée électriquement à l'aide d'une bande de cuivre.

Le vitrage selon l'invention comprend au moins une plaque de verre, une couche électro-conductrice, une feuille en matériau organique transparent et des moyens d'amenée du courant électrique en cuivre et est caractérisé en ce que la couche électroconductrice est déposée sur une face de la plaque de verre et adhère donc à celle-ci directement , et en ce que les moyens d'amenée du courant électrique sont des clinquants en cuivre maintenus au contact de la couche électroconductrice, se trouvant interposés entre couche électro-conductrice et feuille en matériau organique transparent.

Avantageusement, dans le cas d'un vitrage feuilleté ou équivalent ayant au moins une plaque de verre portant la couche électroconductrice et une feuille d'un matériau organique du type PVB, PU (polyuréthane) PVC (chlorure de polyvinyle) ou équivalent, associée et appliquée contre la plaque de verre du côté de la couche conductrice, ces clinquants métalliques sont maintenus en contact avec la couche par la feuille du matériau organique.

L'invention sera maintenant décrite plus en détail en référence aux figures jointes qui représentent :
- figure 1 : une vue éclatée d'un vitrage feuilleté avec couche électro-conductrice alimentée électriquement par des clinquants métalliques,
- figure 2 : une vue éclatée d'un vitrage avec une seule plaque de verre à couche électro-conductrice associée avec une feuille de matériau organique, alimentée électriquement par clinquants métalliques,
- figure 3 : une vue d'une plaque de verre simple revêtue d'une couche électro-conductrice alimentée par clinquants métalliques.
- figure 4 : une vue d'un vitrage analogue à la figure 2, dans lequel les amenées de courant sont formés de deux rubans métalliques.

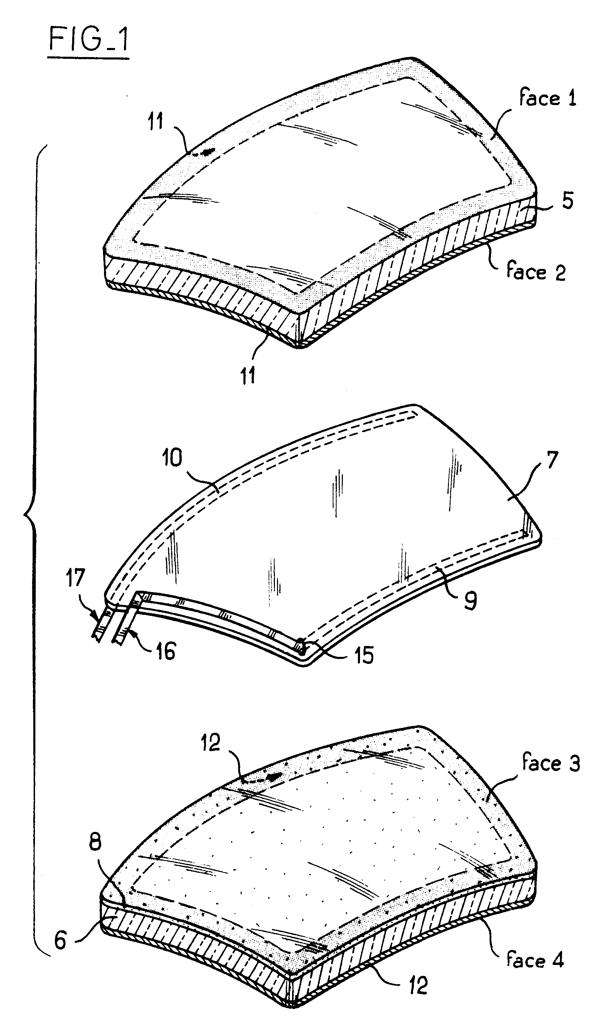

La figure 1 montre un vitrage feuilleté classique utilisé par exemple en tant que pare-brise pour véhicules et en particulier pour automobiles, et portant une couche mince transparente électro-conductrice.

Ce vitrage comprend deux plaques de verre 5 et 6 réunies ensemble grâce à une feuille 7 intercalaire en un matériau organique transparent thermoplastique en PVB ou équivalent par exemple PU ou PVC. Au cours de la fabrication de ce vitrage feuilleté, sous l'effet de la chaleur et de la pression, la feuille 7 devient adhérente aux deux plaques de verre 5 et 6.

Les plaques 5 et 6 sont en verre classique silico-sodo-calcique couramment employé dans l'automobile et le bâtiment. Il peut s'agir de verre clair ou de verre teinté dans sa masse.

L'une au moins des plaques de verre 5 ou 6, par exemple la plaque 6, est revêtue avant feuilletage, sur sa face destinée à venir en contact avec la feuille 7 de matériau thermoplastique type PVB, d'une couche électro-conductrice 8.

Cette couche électro-conductrice 8 est métallique (c'est-à-dire en métal type Ag ou en oxyde (s) métalliques (s) type SnO2 dopé, oxyde d'indium étain (ITO), ou autre) déposée par une des techniques classiques dans le domaine des couches minces, à savoir technique sous vide (évaporation thermique, pulvérisation cathodique, magnétron...), pyrolyse (à partir de composés sous forme de solution ou suspension, sous forme de poudre, sous forme de vapeur), trempage.

La demanderesse a particulièrement apprécié pour leur homogénéité, leurs bonnes performances électriques, leur solidité mécanique, leur capacité à être bombées sans précaution, leur faible coût de revient, les couches ITO pyrolysées obtenues à partir de composés en poudre (formiate d'indium et oxyde de dibutylétain) décrits dans les documents de brevets EP 192 009 et FR 2 625 754.

Des épaisseurs de couche ITO pyrolysées de l'ordre de 180 nm, ou de l'ordre de 350-380 nm ont été proposées, correspondant à des résistances par carré de l'ordre de respectivement 10 ohms et 4,5 ohms, et conférant une couleur bleu-vert ou verte en réflexion appréciée par les clients en matière de vitrages pour automobiles.

Pour alimenter électriquement cette couche électroconductrice 8 sont prévues des bandes d'amenée de courant 9 et 10 constituées par du clinquant métallique, par exemple en cuivre étamé, maintenu en contact avec la couche 8.

Dans le cadre du procédé de fabrication du vitrage feuilleté, ce clinquant métallique est par exemple rendu solidaire de la feuille 7 de matériau du type PVB, qui ultérieurement sera utilisée pour former le vitrage feuilleté.

Chaque brin 9 et 10 est par exemple fixé par soudage contre la face de la feuille 7 de matériau du type PVB destinée lors du feuilletage à venir en contact avec la couche 8.

Il peut s'agir d'abord d'un soudage par points espacés, assurant la solidarisation du clinquant sur la feuille 7, puis avantageusement d'un lissage continu du clinquant sur toute sa longueur avec la panne chaude du fer à souder, renforçant la solidarisation et assurant la planéité du clinquant.

Pour des facilités de montage du vitrage terminé dans sa baie et d'alimentation électrique, il est avantageux que les extrémités des deux brins 9 et 10 de clinquant métallique à raccorder à la source électrique soient disposés sensiblement au même endroit.

Pour ce faire, lesdits deux brins 9 et 10 par exemple disposés l'un horizontalement à proximité du bord supérieur du vitrage, notamment du pare-brise, l'autre horizontalement à proximité du bord intérieur du vitrage, sont prolongés et leurs prolongements amenés sensiblement au même endroit.

Ainsi par exemple si l'on désire une sortie électrique positionnée dans l'angle inférieur du pare-brise, dans le prolongement du brin 10, on fait passer le prolongement du brin 9 de clinquant métallique, sur l'autre face de la feuille 7 de matériau thermoplastique type PVB, au travers d'une échancrure 15, et on le fait cheminer, plaqué contre cette autre face de la feuille 7, suivant une direction sensiblement perpendiculaire à celle des brins 9 et 10, le long du bord de la feuille 7, jusqu'à l'endroit prévu pour la sortie.

Les deux extrémités 16 et 17 de clinquant métallique, isolées l'une de l'autre, sont ainsi en place pour sortir du vitrage sensiblement au même endroit. Bien entendu la même opération peut s'effectuer sur les prolongements des deux clinquants si la sortie commune n'est pas dans le prolongement de l'une des bandes d'amenée de courant.

Les différents éléments du vitrage feuilleté étant préparés, ils sont plaqués les uns sur les autres dans l'ordre déjà indiqué, à savoir la feuille 7 de matériau du type PVB entre les deux plaques de verre 5 et 6, les brins 9 et 10 de clinquant métallique venant en contact avec la couche 8. Ces différents éléments accolés sont alors soumis aux différentes phases du traitement de feuilletage faisant intervenir la chaleur et la pression (pressages mécaniques et/ou mises sous vide) ; ces différentes phases du feuilletage étant classiques, elles ne seront pas décrites ici. Nous indiquerons seulement qu'au cours de ces opérations de feuilletage des températures de l'ordre de 130°/140°C, et des pressions de l'ordre de 10 bars, peuvent être mises en oeuvre.

Le vitrage ainsi feuilleté est prêt à être alimenté électriquement et à être utilisé par exemple en tant que pare-brise chauffant pour un véhicule, en particulier pour une automobile.

En cuivre étamé, sous forme d'un ruban de 8 mm de large, de l'ordre de 80 microns d'épaisseur, ces amenées de courant ont une résistance par mètre de longueur de l'ordre de 0,028 ohm, donc très nettement inférieure à la résistance des amenées de courant traditionnelles déposées par sérigraphie.

Les largeurs et épaisseurs du clinquant métallique employé pourront varier. Toutefois les dimensions données en exemple ci-dessus, c'est-à-dire :
- largeur de l'ordre de 5 mm à 10 mm,
- épaisseur de l'ordre du dizième de mm,
   conviendront pour la majorité des applications.

Le vitrage tel que montré en vue éclatée sur la figure 1 possèdera aussi généralement, lorsqu' il est destiné à être utilisé en tant que vitrage automobile, des dépôts d'émail tels que 12 et 11 destinés essentiellement à masquer de l'extérieur aussi bien que de l'intérieur du véhicule sur lequel est monté le vitrage, les amenées de courant 9 et 10. Ces dépôts 12 et 11 sont disposés en périphérie du vitrage, et par exemple déposés sur les faces 2 et 4 du vitrage, c'est-à-dire la face interne de la plaque de verre externe 5 et la face interne de la plaque de verre 6, les faces d'un feuilleté à deux plaques de verre étant conventionnellement numérotées 1, 2, 3, 4 en allant de l'extérieur du véhicule sur lequel est monté le feuilleté, vers l'intérieur.

L'utilisation de clinquants métalliques pour former les amenées de courant facilite les opérations de fabrication du vitrage feuilleté.

En effet, la plaque de verre 6 porte déjà sur une de ses faces le dépôt périphérique d'émail 12, dépôt qui avant cuisson est fragile et interdit tout contact avec le moindre support. A supposer que des bandes d'amenée de courant soient déposées par sérigraphie sur l'autre face de cette même feuille de verre, bandes d'amenée de courant également fragiles avant cuisson, cela imposerait d'effectuer un premier dépôt soit des bandes d'amenée de courant, soit de l'émail 12, puis une première cuisson pour obtenir la solidité de ce premier dépôt afin de pouvoir amener la plaque de verre en contact avec un support, ensuite d'effectuer le second dépôt et la seconde cuisson.

En variante, pour éviter ces cuissons multiples, on pourrait faire les deux cuissons simultanées, mais avec de telles précautions de manipulation, de telles difficultés de dépôt sur deux faces opposées d'une même plaque de verre, que le coût de fabrication resterait quand même élevé.

L'utilisation de clinquants métalliques simplifie donc beaucoup la fabrication du vitrage feuilleté à couche conductrice.

En variante la couche électro-conductrice 8 peut être déposée sur l'autre plaque de verre, c'est-à-dire en face 2, l'intérêt du clinquant métallique pour former les amenées de courant, ainsi que la façon de le mettre en place, demeurent identiques.

Toutefois la couche 8 disposée en face 3 présente de nombreux avantages comparée à la même couche en face 2. Ainsi notamment elle autorise la dégivrage et également le désembuage alors qu'en face 2 l'énergie qu'elle dispense n'est pas suffisante pour atteindre la face 4 où est susceptible de se former la buée, le désembuage pouvant être nécessaire quand le véhicule roule et que les courant d'air dus à la vitesse sur la face 1, annihilent une partie substantielle de cette énergie.

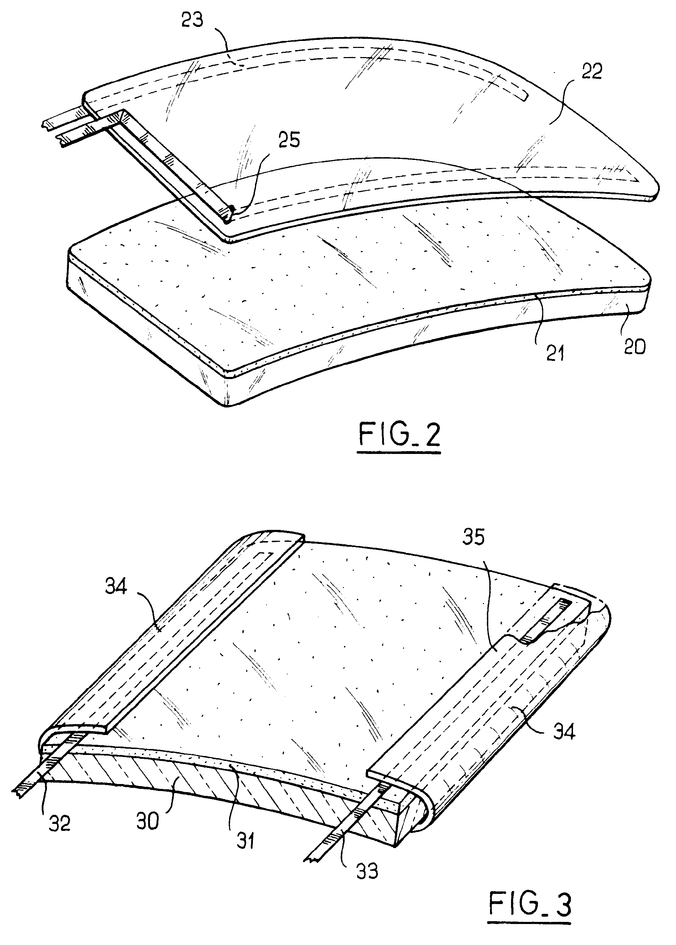

La figure 2 propose l'emploi de clinquants métalliques dans un autre type de vitrage à couche électro-conductrice, à savoir un vitrage équivalent par ses fonctions, à un vitrage feuilleté tel que décrit précédemment, mais ne possédant qu'une seule plaque de verre 20, revêtue sur sa face orientée vers l'intérieur du véhicule sur lequel doit être monté le vitrage, d'une couche électro-conductrice 21 du même type que celle décrite en relation avec la figure 1, et associée avec une feuille 22 d'un matériau transparent organique, notamment un polyuréthane tel que décrit dans les documents de brevets publiés en Europe sous les numéros 54 491, 132 198, 133 090 et le document de brevet publié en France sous le numéro 2 398 606. Dans ces brevets, la feuille de PU est une bicouche comprenant une couche de PU thermoplastique à propriété absorbeur d'énergie et une couche de PU thermodurcissable antilacérante et autocicatrisante.

Comme précédemment les amenées de courant 23 et 24 sont des clinquants métalliques notamment en cuivre étamé d'épaisseur de l'ordre du dixième de mm, par exemple autour de 80 microns, de largeur de l'ordre de 0,5 à 1 cm par exemple 0,8 cm.

Comme précédemment ils peuvent être d'abord positionnés et fixés sur la feuille 22 puis mis en contact et pressés sur la couche 21 lors de l'assemblage de la feuille 22 et de la plaque de verre 20.

Si comme précédemment une sortie 26, 27 des deux clinquants constituant les deux bandes d'amenées de courant est désirée sensiblement au même endroit, la même technique de passage du prolongement de l'un des clinquants, de l'autre côté de la feuille 22, c'est-à-dire du côté non en contact avec la couche 21, au travers d'une échancrure 25, peut être pratiquée.

Avantageusement une isolation électrique recouvrant ce prolongement de clinquant, est souhaitable de façon à éviter tout court-circuit.

Bien entendu si la sortie électrique n'est pas dans le prolongement de l'une des bandes d'amenée de courant, les prolongements des deux clinquants peuvent devoir être passés de l'autre côté de la feuille de PU.

En variante le maintien en contact des clinquants métalliques avec la couche 21 peut être renforcée par une encapsulation du vitrage. On réalise ainsi in-situ par coulée ou injection de matières organiques réactive dans un moule, un cadre au vitrage.

Ce cadre peut servir aussi d'une part à renforcer l'isolation électrique, d'autre part à faire cheminer en son sein les clinquants métalliques, jusqu'à un endroit désiré pour leur sortie du vitrage.

Avantageusement, dans l'un et l'autre des exemples de réalisation illustrés sur les figures 1 et 2 le clinquant métallique est disposé à distance des bords du vitrage, par exemple à 5 mm environ au moins pour éviter tout risque de délamination du feuilleté ou équivalent.

Toutefois, dans la mesure où le vitrage est encapsulé, ce risque de délamination est réduit et les bandes d'amenée de courant peuvent être plus près du bord du vitrage.

La figure 3 montre un vitrage simple 30 revêtu d'une couche électro-conductrice 31. Comme précédemment, l'alimentation électrique de la couche 31 peut être obtenue par des clinquants métalliques 32, 33 en contact avec la couche 31. Ces clinquants peuvent être soudés ou fixés de manière équivalente sur la couche 31 ou simplement être maintenus pressés contre la couche 31, par exemple par un moyen élastique exerçant une pression du type profilé 34 chevauchant le rebord du vitrage et recouvrant par une lèvre 35 le clinquant et le bord de la couche 31 tout en assurant le contact intime du clinquant et de la couche.

Avantageusement ce profilé 34 est un cadre d'encapsulation du vitrage réalisé par coulée ou injection de matières organiques réactives dans un moule adapté aux dimensions et formes du vitrage.

L'encapsulation a été proposée pour les réalisations illustrées par les figures 2 et 3, mais bien entendu l'encapsulation est également possible pour le vitrage de la figure 1.

Elle permet en particulier dans le cas de vitrages feuilletés ou équivalents de disposer les bandes d'amenée de courant à proximité des bords du vitrage, sans risque de délamination dudit vitrage.

Les amenées de courant ont été décrites précédemment, sous la forme de rubans continus 9, 10, 23, 24, 32, 33 dont les extrémités, telles que 16, 17, 26, 27, peuvent émerger du vitrage, en vue de leur raccord à la source électrique, aux bords supérieur et inférieur du vitrage ou bien sensibles au même endroit.

Il est aussi possible que chaque amenée de courant 9, 10, 23, 24, 32, 33, dans l'un quelconque des modes de réalisation, se présentent sous la forme de deux rubans, situées dans le prolongement l'un de l'autre et à faible distance.

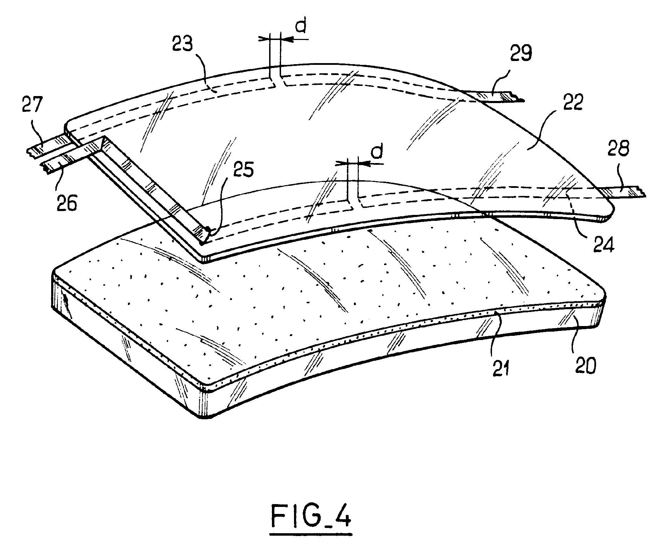

Un mode de réalisation est représenté à la figure 4.

Dans ce cas, chaque amenée de courant 23, 24, comprend deux extrémités 27, 29 et 26, 28 respectivement, avantageusement munies d'isolation électrique, qui émergent du vitrage. La distance d, séparant deux rubans, est suffisamment faible pour ne pas empêcher le passage du courant (d inférieure à 5 mm).

Ces modes de réalisation présentent l'avantage de laisser le choix, selon l'utilisation prévue, des extrémités à raccorder à la source électrique.

## Revendications

1. Vitrage comprenant au moins une plaque de verre (5, 6 ; 20, 30), une couche électroconductrice (8 ; 21 ; 31), une feuille (7 ; 22) en matériau organique transparent et des moyens d'amenée du courant électrique en cuivre, **ca****ractérisé en** **ce** **que** la couche électro-conductrice (8 ; 21 ; 31) est déposée sur une face de la plaque de verre et adhère donc directement à elle **et** **en** **ce** **que** les moyens d'amenée du courant électrique sont des clinquants (9, 10 ; 23, 24 ; 32, 33) en cuivre interposés entre couche électroconductrice (8 ; 21 ; 31) et feuille (7 ; 22) en matériau organique transparent.

2. Vitrage selon la revendication 1, caractérisé en ce que les cliquants métalliques (9, 10 ; 23, 24 ; 32, 33) sont en cuivre étamé.

3. Vitrage selon l'une des revendications 1 ou 2, caractérisé en ce que les clinquants (9, 10 ; 23, 24 ; 32, 33) ont une épaisseur de l'ordre du dizième de mm, notamment environ 80 microns, et une largeur de l'ordre de 0,5 à 1 cm, notamment environ 0,8 cm.

4. Vitrage selon la revendication 3, caractérisé en ce que les clinquants (9, 10 ; 23, 24 ; 32, 33) sont formés de rubans continus.

5. Vitrage selon la revendication 3, caractérisé en ce que chaque amenée de courant est constituée par deux rubans, situés dans le prolongement l'un de l'autre et séparés par une distance (d) inférieure à 5 mm.

6. Vitrage selon l'une des revendications 1 à 5, caractérisé en ce que la couche électro-conductrice (8 ; 21 ; 31) est une couche de métal type Ag ou une couche d'oxydes métalliques, notamment SnO₂ dopé ou ITO.

7. Vitrage selon la revendication 6, caractérisé en ce que la couche électroconductrice est une couche pyrolysée, notamment à partir de poudres.

8. Vitrage selon l'une des revendications 6 ou 7, caractérisé en ce que la couche électro-conductrice (8 ; 21 ; 31) a une épaisseur de l'ordre de 180 nm ou 350-380 nm.

9. Vitrage selon l'une des revendications 1 à 8, caractérisé en ce que la feuille (7, 22) en matériau organique transparent est en une matière plastique du type PVB, PU, PVC, appliquée contre la couche électro-conductrice (8 ; 21 ; 31) et adhérente à ladite couche.

10. Vitrage selon la revendication 9, caractérisé en ce que les clinquants (9, 10 ; 23, 24 ; 32, 33) sont d'abord positionnés sur la feuille de matière plastique (7 ; 22) et fixés sur elle, avant que ladite feuille ne soit appliquée sur la plaque de verre (5, 6 ; 20 ; 30) portant la couche et solidarisée avec elle.

11. Vitrage selon la revendication 10, caractérisé en ce que les clinquants (9, 10 ; 23, 24 ; 32, 33) sont fixés à la couche (7 ; 22) par soudure, notamment par points espacés.

12. Vitrage selon la revendication 10 ou 11, caractérisé en ce que deux extrémités de clinquants (9, 10 ; 23, 24) destinées à être reliées à une source de courant électrique sortent du vitrage sensiblement au même endroit.

13. Vitrage selon la revendication 12, caractérisé en ce que le prolongement de l'un au moins des clinquants, constituant une bande d'amenée de courant, est passé de l'autre côté de la feuille (7 ; 22) du type PVB, PU, PVC au travers d'une échancrure pratiquée dans cette feuille pour cheminer plaqué contre cet autre côté de la feuille jusqu'à l'endroit prévu pour la sortie.

14. Vitrage selon l'une des revendications précédentes, caractérisé en ce qu'il comprend deux plaques de verre (5, 6) dont l'une au moins porte une couche électro-conductrice (8), les clinquants métalliques (9, 10), la feuille (7) de matière plastique du type PVB, PU, PVC, celle-ci adhérant d'une part à ladite couche électro-conductrice et à la deuxième plaque de verre, formant ainsi un feuilleté.

15. Vitrage selon l'une des revendications 1 à 13, caractérisé en ce qu'il est constitué, dans l'ordre, d'une seule plaque de verre (20) portant la couche électro-conductrice (21), de clinquants métalliques (23, 24) et d'une feuille de matière plastique (22) constituée d'une couche de PU thermoplastique à propriété d'absorbeur d'énergie et une couche de PU thermodurcissable à fonction antilacérante et autocicatrisable.

16. Vitrage selon l'une des revendications précédentes, caractérisé en ce que les clinquants métalliques (9, 10, 23, 24, 32, 33) sont disposés à distance des bords dudit vitrage.

17. Vitrage selon l'une des revendications précédentes, caractérisé en ce qu'il est encapsulé par un cadre d'encapsulation (34).

## Patentansprüche

1. Verglasung, umfassend wenigstens eine Glasscheibe (5, 6; 20, 30 ), eine elektrisch leitende Schicht (8; 21; 31) eine Folie (7; 22) aus durchsichtigem organischen Material und aus Kupfer bestehende Mittel für die Zufuhr von elektrischem Strom, **dadurch** **gekennzeichnet**, **daß** die elektrisch leitende Schicht (8; 21; 31) auf einer Seite der Glasscheibe aufgebracht ist und daher direkt an ihr haftet **und** **daß** die Mittel für die Zufuhr des elektrischen Stroms Kupferfolien (9, 10; 23, 24; 32, 33) sind, die zwischen elektrisch leitender Schicht (8; 21; 31) und Folie (7; 22) aus durchsichtigem organischen Material eingelegt sind.

2. Verglasung nach Anspruch 1, **dadurch** **gekennzeichnet**, **daß** die Metallfolien (9, 10; 23, 24; 32, 33) aus verzinntem Kupfer bestehen.

3. Verglasung nach Anspruch 1 oder 2, **dadurch** **gekennzeichnet**, **daß** die Metallfolien (9, 10; 23, 24; 32, 33) eine Dicke von etwa 0,1 mm und insbesondere von etwa 80 µm und eine Breite von etwa 0,5 bis 1 und insbesondere von etwa 0,8 cm aufweisen.

4. Verglasung nach Anspruch 3, **dadurch** **gekennzeichnet**, **daß** die Metallfolien (9, 10; 23, 24; 32, 33) aus kontinuierlichen Streifen bestehen.

5. Verglasung nach Anspruch 3, **dadurch** **gekennzeichnet**, **daß** jede Stromzuführung aus zwei Streifen besteht, von denen sich einer in Verlängerung des anderen befindet und die durch einen Abstand (d), der kleiner als 5 mm ist, voneinander getrennt sind

6. Verglasung nach einem der Ansprüche 1 bis 5, **dadurch** **gekennzeichnet**, **daß** die elektrisch leitende Schicht (8; 21; 31) eine Schicht aus einem Metall des Silber-Typs oder aus Metalloxiden, insbesondere dotiertem SnO₂ oder Indium-Zinn-Oxid, ist.

7. Verglasung nach Anspruch 6, **dadurch** **gekennzeichnet**, **daß** die elektrisch leitende Schicht eine insbesondere ausgehend von Pulvern pyrolytisch hergestellte Schicht ist.

8. Verglasung nach Anspruch 6 oder 7, **dadurch** **gekennzeichnet**, daß die elektrisch leitende Schicht (8; 21; 31) eine Dicke von etwa 180 oder 350 bis 380 nm aufweist.

9. Verglasung nach einem der Ansprüche 1 bis 8, **dadurch** **gekennzeichnet**, daß die Folie (7; 22) aus durchsichtigem organischen Material aus einem Kunststoff des PVB-, PU- und PVC-Typs besteht, welche an die elektrisch leitende Schicht (8; 21; 31) angedrückt ist und an ihr haftet.

10. Verglasung nach Anspruch 9, **dadurch** **gekennzeichnet**, daß die Metallfolien (9, 10; 23, 24; 32, 33) zunächst auf der Kunststoffolie (7; 22) angeordnet und darauf befestigt werden, bevor diese Folie an die Glasscheibe (5, 6; 20; 30), welche die Schicht trägt, angelegt und mit ihr verbunden wird.

11. Verglasung nach Anspruch 10, **dadurch** **gekennzeichnet**, **daß** die Metallfolien (9, 10; 23, 24; 32, 33) auf der Schicht (7; 22) durch Schweißen, insbesondere Punktschweißen, befestigt werden.

12. Verglasung nach Anspruch 10 oder 11, **dadurch** **gekennzeichnet**, **daß** die beiden Enden der Metallfolien (9, 10; 23, 24), die an eine elektrische Stromquelle angeschlossen werden sollen, aus der Verglasung an etwa derselben Stelle austreten.

13. Verglasung nach Anspruch 12, **dadurch** **gekennzeichnet**, **daß** die Verlängerung wenigstens einer der Metallfolien, die einen Stromzuführungsstreifen bilden, von der anderen Seite der Folie (7; 22) des Typs PVB, PU, PVC durch eine halbmondförmige Aussparung, die in dieser Folie angebracht ist, gesteckt wird, um abgedeckt gegen diese andere Seite der Folie bis zu der für ihren Austritt vorgesehenen Stelle zu führen.

14. Verglasung nach einem der vorhergehenden Ansprüche, **da****durch gekennzeichnet**, **daß** sie zwei Glasscheiben (5, 6), von denen wenigstens eine mit einer elektrisch leitenden Schicht (8) versehen ist, die Metallfolien (9, 10) und die Folie (7) aus einem Kunststoff wie PVB, PU, PVC umfaßt, die einerseits auf der elektrisch leitenden Schicht und andererseits auf der zweiten Glasplatte anhaftet, wodurch ein Verbund gebildet wird.

15. Verglasung nach einem der Ansprüche 1 bis 13, **dadurch** **ge****kennzeichnet**, **daß** sie aufeinanderfolgend aus einer einzigen Glasscheibe (20), welche die elektrisch leitende Schicht (21) trägt, Metallfolien (23, 24) und einer Kunststoffolie (22) gebildet ist, die aus einer thermoplastischen Polyurethanschicht mit energieabsorbierenden Eigenschaften und einer duroplastischen Polyurethanschicht mit reißfesten und bei Beschädigung selbstheilenden Eigenschaften besteht.

16. Verglasung nach einem der vorhergehenden Ansprüche, **da****durch gekennzeichnet**, **daß** die Metallfolien (9, 10, 23, 24, 32, 33) in einem Abstand von den Rändern dieser Verglasung angeordnet sind.

17. Verglasung nach einem der vorhergehenden Ansprüche, **da****durch gekennzeichnet**, **daß** sie von einem Einfassungsrahmen (34) umgeben ist.

## Claims

1. A window comprising at least one glass plate (5, 6; 20, 30), an electroconductive layer (8; 21; 31), a sheet (7; 22) of transparent organic material and means of electric current input made of copper, characterized in that the electroconductive layer (8; 21; 31) is deposited on one face of the glass plate and therefore adheres directly to it and in that the means of electric current input consist of copper foil strips (9, 10; 23, 24; 32, 33) located between the electroconductive layer (8; 21; 31) and the sheet (7; 22) made of transparent organic material.

2. A window according to claim 1, characterized in that the metal foil strips (9, 10; 23, 24; 32, 33) are of tinned copper.

3. A window according to either of claims 1 or 2, characterized in that the foil strips (9, 10; 23, 24; 32, 33) have a thickness of the order of 0.10 mm, particularly around 80 microns, and a width of the order of 0.5 to 1 cm, particularly around 0.8 cm.

4. A window according to claim 3, characterized in that the foil strips (9, 10; 23, 24; 32, 33) are formed of continuous strips.

5. A window according to claim 3, characterized in that each current input is comprised of two strips located in the extension of one another and separated by a distance (d) of less than 5 mm.

6. A window according to any one of claims 1 to 5, characterized in that the electroconductive layer (8; 21; 31) is a layer of metal such as Ag or a layer of metallic oxides, particularly doped SnO₂ or ITO.

7. A window according to claim 6, characterized in that the electroconductive layer is a pyrolysed layer, particularly derived from powders.

8. A window according to either of claims 6 or 7, characterized in that the electroconductive layer (8, 21; 31) has a thickness of the order of 180 nm or 350-380 nm.

9. A window according to any one of claims 1 to 8, characterized in that the sheet (7, 22) of transparent organic material is made of a plastic material such as PVB, PU or PVC applied against the electroconductive layer (8; 21; 31) and bonded to the said layer.

10. A window according to claim 9, characterized in that the foil strips (9, 10; 23, 24; 32, 33) are initially positioned on the sheet of plastic material (7; 22) and secured thereto before such sheet is applied to the glass plate (5, 6; 20; 30) carrying the layer and made integral therewith.

11. A window according to claim 10, characterized in that the foil strips (9, 10; 23, 24; 32, 33) are secured to the layer (7; 22) by soldering, in particular at spaced points.

12. A window according to claim 10 or 11, characterized in that the two ends of the foil strips (9, 10; 23, 24) intended to be connected to an electric power source come out of the window substantially in the same place.

13. A window according to claim 12, characterized in that the extension of at least one of the foil strips constituting a current input strip, is passed from the other side of the sheet (7; 22), for example of PVB, PU or PVC, through a groove made in such sheet, to be routed flat against such other side of the sheet up to the envisaged point of exit.

14. A window according to any one of the previous claims, characterized in that it comprises two glass plates (5, 6) at least one of which carries an electroconductive layer (8), metal foil strips (9, 10) and sheet (7) of plastic material such as PVB, PU or PVC, the latter adhering both to the said electroconductive layer and to the second glass plate, thus forming a laminate.

15. A window according to any one of claims 1 to 13, characterized in that it is comprised, in sequence, of a single glass plate (20) carrying the electroconductive layer (21), metal foil strips (23, 24) and a sheet of plastic material (22) consisting of a layer of thermoplastic PU having energy-absorbing properties and a layer of heat-hardening PU having an anti-tearing and self-sealing function.

16. A window according to any one of the previous claims, characterized in that the metal foil strips (9, 10, 23, 24, 32, 33) are located at a distance from the edges of the said window.

17. A window according to any one of the previous claims, characterized in that it is encapsulated by an encapsulation frame (34).
